# EUROPEAN PATENT APPLICATION

(11) **EP 3 310 015 A1**
(43) Date of publication of application: **18.04.2018**
(21) Application number: 16193361.9
(22) Date of filing: 11.10.2016
(51) Int. Cl.: H04L 29/06, H04L 29/12

(54) **NETWORK FILTERING USING ROUTER CONNECTION DATA**

(71) Applicant: Secucloud GmbH, 20354 Hamburg (DE)
(72) Inventor: Bajerke, Steffen, 18209 Bad Doberan (DE)
(74) Representative: Grünecker Patent- und Rechtsanwälte PartG mbB

(57) **Abstract**

A network routing apparatus and network filter system as well as corresponding methods and media are provided. The network routing apparatus directs any data traffic originating from a client device through the network filter system. In addition, the network routing apparatus performs address translation and connection tracking and it repeatedly send at least part of the tracked connection data to the network filter system. The network filter system uses this data to identify the client device which the data traffic passing through the network filter system originates from, or is destined for. The data communicated from the network routing apparatus to the network filter system may include the private address of the client device and the respective port number used.

## Description

### BACKGROUND OF THE INVENTION

### 1. Field of the Invention

The invention relates to network routing and filtering techniques.

### 2. Description of the Related Art

Network routers are devices that forward data packets between computer networks. When a data packet comes in from one of the computer networks, the router reads the address information in the packet and determines the intended destination. It then directs the packet to the next network. The most familiar type of routers are home routers or small office routers that direct traffic between home or office computers and the internet. Such routers are often cable routers or DSL (Digital Subscriber Line) routers which establish a connection to the internet through an ISP (Internet Service Provider). Apart from home routers, enterprise routers exist to provide routing services to large business or ISP networks, and there are powerful core routers that act at the internet backbone.

Home and small office routers often do not just provide routing services but also add security and filtering features. This provides significant advantages as it helps protecting the home or small office network. However, such security and filtering features need to be implemented, configured, maintained, and updated at each routing device. This is inconvenient on the one hand as it requires users or providers to adjust their settings in the routing device or update its firmware from time to time. On the other hand, if this maintenance is not performed thoroughly, then the routing device itself may cause security risks to the home or small office network.

This situation is significantly improved when the routing device is configured to direct any data traffic from the home or small office network to a dedicated server or server farm which has implemented a network filter system. Since all the traffic from the users is directed to this network filter system, it is not necessary for the router itself to implement its own security and filter mechanisms. All security features are provided by the network filter system on the server(s), and it is then just required that the network filter system be maintained and updated to exclude any known security risk. This centralized approach therefore provides tremendous advantages to users as the users are relieved of any maintenance tasks and nevertheless can appreciate most up to date security and filtering features.

When using such a network filter system located on a server or in a cloud, then the network filter system can provide its services to a huge number of different users at the same time. All of the users can then benefit from the high level security provided by the system. Moreover, as the network filter system can identify the routing devices from which it receives the various data traffics, it can also provide different security or filter mechanisms to different routing devices, *i.e.,* to different home or small office networks behind such routing devices.

It is however often not possible for the network filter system to identify individual users or devices within a given home or small office network. Many routers use masquerading techniques that hide an entire IP (Internet Protocol) address space behind a single IP address. An example of routing devices that use IP masquerading are NAT (Network Address Translation) routers. When a routing device masquerades its private network, *i.e.,* the home or small office network, then it substantially replaces any address of the home or small office network with the router's own address which is an address of the public address space. Apart from such IP masquerading techniques, there are other situations which make it difficult or impossible for a server based network filter system to identify users or devices in the private home or small office network behind a routing device.

It would however be desirable to allow such network filter systems to apply their security and/or filter mechanisms on a better granularity than in the known art, *e.g.,* on a user or device specific basis. For instance, if the network filter system could identify particular devices in the private home or small office network, then it would be possible to apply different security standards or specific filter conditions to different types of devices such as television apparatus, thermostats, webcams, notebooks, IoT (Internet of Things) devices, or the like. It would also be possible to identify different users and apply user specific filter conditions. Just as an example, it would then be possible to apply parental filtering standards to devices to which children have access. Apart from this, user specific security and/or filtering conditions would be beneficial for almost all types of users and client devices.

One potential solution using known techniques would be to establish VPN (Virtual Private Network) tunnels between the client devices and the network filter system through the respective routing device. However, this would require to encapsulate the data packets and to add identifiers to distinguish local users or devices, or use additional address mappings. Using VPN tunnels for this purpose would therefore lead to an increased latency of the data packets, and to an overhead that reduces the available bandwidth. Further, the need to encapsulate and decapsulate packets requires additional processing resources, which may lead to substantial problems, in particular when also using encryption techniques. Also at the side of the providers, additional infrastructure would be required. In total, this technique would reduce the performance and stability. In addition, using VPN tunnels for this purpose would have other disadvantages such as the fact that the router is no longer accessible from the public network through its IP address, which makes it impossible or at least difficult to use internet services which require accessing a client or the routing device from the public network.

### SUMMARY OF THE INVENTION

An improved technique is provided which allows a network filter system to which any client data traffic is routed, to identify client devices behind a router, without requiring establishing VPN tunnels.

A network routing apparatus and network filter system as well as corresponding methods and media are provided. The network routing apparatus directs any data traffic originating from a client device through the network filter system. In addition, the network routing apparatus performs address translation and connection tracking and it repeatedly send at least part of the tracked connection data to the network filter system. The network filter system uses this data to identify the client device which the data traffic passing through the network filter system originates from, or is destined for. The data communicated from the network routing apparatus to the network filter system may include the private address of the client device and the respective port number used.

There is provided a network routing apparatus for directing data traffic between a first computer network and a second computer network. The first computer network comprises at least one client device, and the second computer network comprises at least one server device and a network filter system. The network routing apparatus is arranged to direct any data traffic originating from the at least one client device and destined for the at least one server device through the network filter system. The network routing apparatus comprises an address translation unit for translating addresses within the address space of the first computer network to addresses within the address space of the second computer network.

The network routing apparatus further comprises a connection tracking table storing data describing data traffic that has passed the network routing apparatus. The data includes addresses within the address space of the first computer network and respective translated addresses within the address space of the second computer network. The network routing apparatus further comprises a connection data transmission unit for repeatedly sending at least part of the data stored in the connection tracking table to the network filter system. The at least part of the data includes information suitable for the network filter system to identify, for a given data traffic passing through the network filter system, the client device from which this data traffic originates.

In an embodiment, the at least part of the data is data that has changed in the connection tracking table since the last transmission.

The at least part of the data may include at least one address of a client device within the address space of the first computer network, and a port number used for the data traffic originating from the client device. In addition, the at least part of the data may further include an address of a server device which the data traffic originating from the client device is destined for, and a port number of the server device which the data traffic originating from the client device is destined for.

In an embodiment, the network routing apparatus is arranged to operate in accordance with the ICMP protocol and the connection data transmission unit is further arranged to send ICMP sequence numbers to the network filter system.

Alternatively, or additionally, the network routing apparatus may be arranged to comply with IPsec and the connection data transmission unit may then be further arranged to send SPI tags to the network filter system.

Moreover, the at least part of the data may include a MAC address of the client device from which the data traffic originates.

There is further provided a network filter system for applying at least one network security and/or filter mechanism to data traffic received from and/or sent to a network routing apparatus. The network routing apparatus is arranged for directing data traffic between a first computer network comprising at least one client device and a second computer network comprising the network filter system. The network filter system comprises a security filter unit for applying the at least one network security and/or filter mechanism, and a connection data reception unit for repeatedly receiving from the network routing apparatus data describing data traffic that has passed the network routing apparatus. The data includes information suitable to identify, for a given data traffic passing through the network filter system, the client device from which this data traffic originates and/or which this data traffic is destined for. The network filter system further comprises a connection data store for storing the data received by the connection data reception unit.

The security filter unit may be arranged to identify from the received data the client device which a current data traffic originates from and/or which this data traffic is destined for, and individually adjust the at least one network security and/or filter mechanism to the identified client device.

In an embodiment, the information includes an address of the client device within the address space of the first computer network, and a port number used for the data traffic originating from, or destined for, the client device. The information may further include an address of a server device which the data traffic originating from the client device is destined for, or which the data traffic destined for the client device is originating from, and a associated port number of the server device.

In an embodiment, the information includes an address of the network routing apparatus within the address space of the second computer network.

Moreover, there is provided a method of operating a network routing apparatus for directing data traffic between a first computer network and a second computer network. The first computer network comprises at least one client device, and the second computer network comprises at least one server device and a network filter system. The network routing apparatus is arranged to direct any data traffic originating from the at least one client device and destined for the at least one server device through the network filter system. The method comprises translating addresses within the address space of the first computer network to addresses within the address space of the second computer network. The method further comprises storing data in a connection tracking table, wherein the data describes data traffic that has passed the network routing apparatus and includes addresses within the address space of the first computer network and respective translated addresses within the address space of the second computer network. Further, the method comprises repeatedly sending at least part of the data stored in the connection tracking table to the network filter system. The at least part of the data includes information suitable for the network filter system to identify, for a given data traffic passing through the network filter system, the client device from which this data traffic originates.

Furthermore, there is provided a method of operating a network filter system to apply at least one network security and/or filter mechanism to data traffic received from and/or sent to a network routing apparatus. The network routing apparatus is arranged for directing data traffic between a first computer network comprising at least one client device and a second computer network comprising the network filter system. The method comprises receiving data traffic from the network routing apparatus and/or from an internet server, and applying the at least one network security and/or filter mechanism to the received data traffic. The method further comprises repeatedly receiving, from the network routing apparatus, data describing data traffic that has passed the network routing apparatus.

Additionally, there is provided a computer-readable storage medium that stores instructions that, when executed by at least one processor, cause the at least one processor to perform the method of any of the embodiments described in the disclosure or shown in the drawings.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram illustrating the overall system according to an embodiment of the invention;
FIG. 2 is a diagram illustrating a connection tracking table according to an embodiment;
FIG. 3 is a flowchart illustrating a process performed by a network routing apparatus according to an embodiment; and
FIG. 4 is a flowchart illustrating a process performed by a network filter system according to an embodiment.

### DETAILED DESCRIPTION OF THE INVENTION

The illustrative embodiments of the present invention will be described with reference to the figure drawings wherein like elements and structures are indicated by like reference numbers.

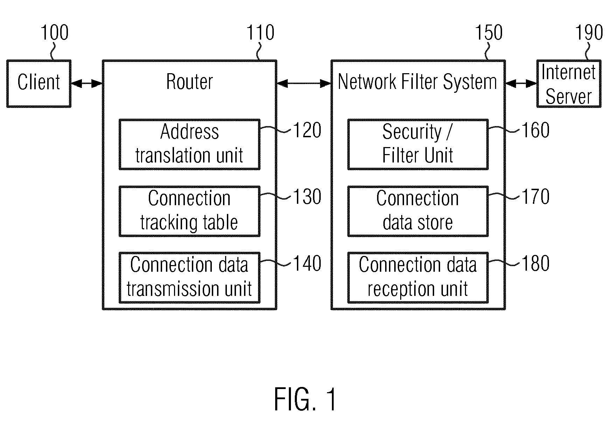

Referring now to FIG. 1, an exemplary system according to an embodiment is shown which includes components that may be used to implement the invention. The system is shown to include a router 110 which may be any network routing apparatus. In an embodiment, the router 110 is used to connect a home or small office network to the internet, and it may preferably be a NAT router and/or a router using IP masquerading techniques.

The router 110 directs data traffic between a first computer network, which is the router's private network including one or more hardware or software clients 100, and a second computer network which may be the router's public network. This second computer network includes a network filter system 150 and at least one internet server 190. The network filter system 150 will be described in more detail below. The internet server 190 may be any server that is connected to the internet and provides services in response to a request from one of the clients 100.

The router 110 is arranged to direct any data traffic originating from any client 100 and destined for the internet server 190 through the network filter system 150. This allows the router 110 to delegate any security and/or filter tasks to the network filter system 150.

As shown in FIG. 1, the router 110 comprises an address translation unit 120 that translates addresses within the private address space to addresses within the public address space.

The router further includes a connection tracking table 130 which stores data describing the traffic that has passed the router. In an embodiment, the router 110 is linux-based and operates a Netfilter framework for connection tracking. The user-space tool conntrack and its associated daemon conntrackd may be used to review the Netfilter connections in the connection tracking table 130. It is noted that other techniques may be used to track connection data in table 130.

Again referring to FIG. 1, the router 110 further includes a connection data transmission unit 140 that repeatedly sends at least part of the data stored in the connection tracking table 130 to the network filter system 150. In an embodiment, the connection data transmission unit 140 sends most recently added data of the connection tracking table 130 to the network filter system 150, to reduce the amount of data to be sent. In another embodiment, the connection data transmission unit 140 repetitively copies the entire connection tracking table 130 to the network filter system 150 rather than performing incremental transmissions.

In one embodiment, the connection data transmission unit 140 performs the data transmissions on a periodic basis. In another embodiment, the transmission is performed whenever new data has been stored in the connection tracking table 130.

While it is a preferred embodiment that the connection data transmission unit 140 performs the transmission of the connection data on its own, embodiments exist in which the connection data transmission unit 140 is arranged to perform its transmissions upon request. Thus, in an embodiment, the network filter system 150 requests connection data from the router 110 and the router's connection data transmission unit 140 is arranged to send connection data to the network filter system 150 in response to such a request.

Discussing now the network filter system 150 in more detail, it is noted that this system may be server based or cloud based. It includes a security/filter unit 160 that applies security and/or filter mechanisms to data traffic passing through the network filter system 150. The security and/or filter mechanisms may be applied to data traffic in either direction, from router 110 to internet server 190 and vice versa. In an embodiment, different mechanisms may be used for data traffic of different directions.

As will be described in more detail, the security/filter unit 160 may apply client specific security and/or filter conditions, depending on the type or identity of the client device or user. For this purpose, the network filter system 150 further may include a connection data reception unit 180 that receives connection data from the router 110, sent by the router's connection data transmission unit 140. In an embodiment, the connection data reception unit 180 is capable of sending requests to the router 110 to cause the router's connection data transmission unit 140 to send connection data to the network filter system 150.

The network filter system 150 may further comprise a connection data store 170 that stores the connection data received from the connection data reception unit 180.

In an embodiment, the router 110 applies port preservation at least for TCP (Transmission Control Protocol) connections. If, for instance, client 100 has a private IP address of 192.168.178.100 and attempts to access the internet server 190 at its public IP address 40.50.60.70 using port 80, then the router 110 (which may have a public IP address of 20.30.40.50) chooses an arbitrary source port, e.g., 1234, but preserves this when replacing the client's private IP address with the router's public IP address. Thus, the initial request
192.168.178.100:1234 → 40.50.60.70:80
will be translated to: 20.30.40.50:1234 → 40.50.60.70:80.

As may be seen from this example, the router 110 has replaced the client's private IP address 192.168.178.100 with the router's public IP address 20.30.40.50, but it has preserved the source port 1234.

The same applies if another client 100 in the same private network attempts to connect to the same internet server 190. For instance, this other client may have a private IP address of 192.168.178.200, and the source port may in this case be 4321. Thus, the router 110 then translates
192.168.178.200:4321 → 40.50.60.70:80
to the following request in the public network:
20.30.40.50:4321 → 40.50.60.70:80.

As can be seen from this example, the requests from the two different clients differ in just the source port number. At least the private IP addresses of the clients and the respective source ports may be stored, in this embodiment, in the connection tracking table 130 and communicated to the network filter system 150. This allows the security/filter unit 160 of the network filter system 150 to review the port number in the data traffic received from the router 110 and then review the received connection data to obtain from this port number the associated private IP address of the client. The security/filter unit 160 can therefore identify the client 100 from which the data traffic originates, even though the data traffic sent from the router 110 to the network filter system 150 did not include the client's private IP address.

While this is a preferred embodiment of the invention, it is noted that other embodiments exist as well which do not make use of port preservation. For instance, the router 110 may operate in accordance with the ICMP, Internet Control Message Protocol, and the connection data transmission unit 140 may then send ICMP sequence numbers to the network filter system 150. In another embodiment, the router 110 may comply with IPsec, Internet Protocol Security, and the connection data transmission unit 140 may then send SPI, Security Parameter Index, tags to the network filter system 150. In yet another embodiment, the router 110 may send the client's MAC, Media Access Control, address to the network filter system 150. Any of this information may be used by the network filter system's security/filter unit 160 to identify the client device or user in the private network of router 110. It is noted that any of the above techniques (port preservation, ICMP, SPI, MAC) may be used with any other of these techniques at the same time, thereby combining these techniques to even more improve the options for client identification.

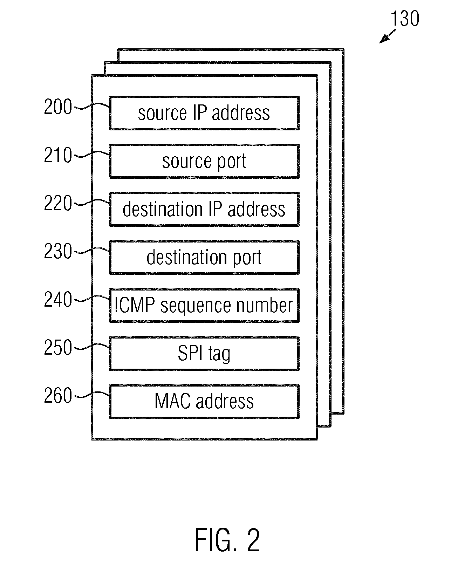

Referring now to FIG. 2, an exemplary connection tracking table 130 is depicted. As can be seen from this figure, the connection tracking table 130 may include a data field 200 to store source IP addresses such as 192.168.178.100, a data field 210 to store source ports such as 1234, a data field 220 to store destination IP addresses such as 40.50.60.70, a data field 230 to store destination ports such as 80, a data field 240 to store ICMP sequence numbers, a data field 250 to store SPI tags, and a data field 260 to store MAC addresses. It is noted that in other embodiments, the connection tracking table 130 may include just some of these data fields, and/or additional data fields.

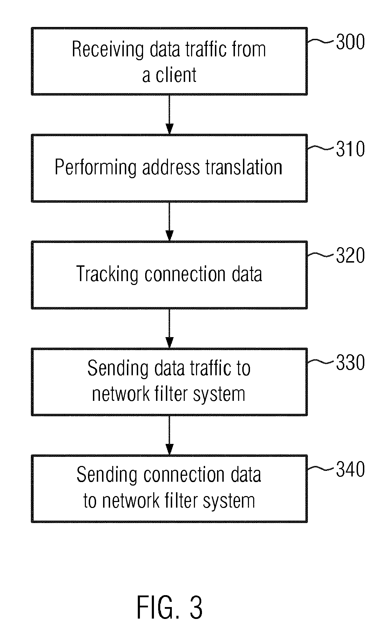

Turning now to FIG. 3, a flowchart is shown to illustrate the process performed by the router 110 in accordance with an embodiment. In step 300, data traffic is received from one of the clients 100. Step 310 performs address translation in the address translation unit 120 of the router 110. In step 320, the router 110 performs connection tracking and stores the connection data in the connection tracking table 130. In step 330, the router 110 sends the received data traffic to the network filter system 150. This data traffic may use addresses translated in step 310. In step 340, the router's connection data transmission unit 140 sends connection data to the network filter system 150. As noted above, this connection data may be any subset of the data discussed above and shown in FIG. 2, and it may also include other data.

While FIG. 3 illustrates the steps to be performed in a certain order, it is noted that this order may be different in other embodiments. For instance, step 310 of performing address translation and step 320 of tracking connection data may be performed in a different sequence, or even simultaneously, or independently from each other and asynchronously. Similarly, step 330 of sending the data traffic to the network filter system 150 and step 340 of sending the connection data to the network filter system 150 may be performed independently from each other and not necessarily in the order shown.

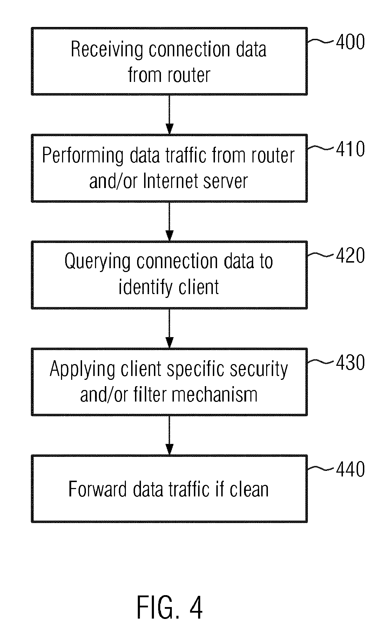

Turning now to FIG. 4, a process is shown that may be performed by the network filter system 150 in an embodiment. In step 400, connection data is received from the router 110 and stored in the connection data store 170. In an embodiment where the router's connection data transmission unit 140 transmits the entire connection tracking table 130, the connection data stored in the connection data store 170 are the same as shown in FIG. 2. In other embodiments, only a subset of this data is received in step 400 and stored.

In step 410, the network filter system 150 receives data traffic from the router 110 and/or from the internet server 190.

In step 420, the security/filter unit 160 queries the connection data stored in the connection data store 170 to identify the user or client device 100 from which the data traffic originates or for which the data traffic is destined. Once the client has been identified, step 430 applies user or client specific security and/or filter mechanisms by means of security/filter unit 160.

If the security and/or filter mechanism applied does not instruct the network filter system 150 to block the data traffic, the data traffic is forwarded in step 440 to the respective recipient, *i.e.,* to the client 100 through the router 110 or to the internet server 190.

Thus, in the various embodiments, a network filtering technique is provided that may be server based or cloud based and that protects clients from malware and/or provides client specific filtering with minimum or no maintenance requirements at the router. Parental filtering services and dedicated services particularly suited to IoT devices are just some of the examples where the invention may be of particular advantages. No VPN tunnels are required, thereby avoiding particular drawbacks involved with such techniques, such as latency, data overhead, degraded processing performance and reduced stability. According to the invention, the router 110 may keep its public IP address so that the router and its client(s) remain accessible from the public network. The invention is easy to implement, in particular where connection tracking tables are already present in the router 110. Another advantage of the invention is that the transmission of the connection data from the router 110 to the network filter system 150 and the use of this data in the network filter system 150 may be separated from other routing and filtering functionality so that the technique of the embodiments has no negative influence on the functioning of any internet services. Thus, the invention provides significant advantages to users as well as to service providers.

While the invention has been described with respect to the physical embodiments constructed in accordance herewith, it will be apparent to those skilled in the art that various modification, variation and improvements of the present invention may be made in the light of the above teachings and within the purview of the appended claims without departing from the spirit and intended scope of the invention. Accordingly, it is to be understood that the invention is not limited by the specific illustrative embodiments, but only by the scope of the appended claims.

## Claims

1. A network routing apparatus (110) for directing data traffic between a first computer network and a second computer network, the first computer network comprising at least one client device (100), the second computer network comprising at least one server device (190) and a network filter system (150), the network routing apparatus being arranged to direct any data traffic originating from said at least one client device and destined for said at least one server device through said network filter system, the network routing apparatus comprising:
an address translation unit (120) for translating addresses within the address space of the first computer network to addresses within the address space of the second computer network;
a connection tracking table (130) storing data describing data traffic that has passed the network routing apparatus, said data including addresses within the address space of the first computer network and respective translated addresses within the address space of the second computer network; and
a connection data transmission unit (140) for repeatedly sending at least part of the data stored in the connection tracking table to said network filter system, said at least part of the data including information suitable for the network filter system to identify, for a given data traffic passing through the network filter system, the client device from which this data traffic originates.

2. The network routing apparatus of claim 1, wherein said at least part of the data is data that has changed in the connection tracking table since the last transmission.

3. The network routing apparatus of claim 1 or 2, wherein said at least part of the data includes at least one address (200) of a client device within the address space of the first computer network, and a port number (210) used for the data traffic originating from said client device.

4. The network routing apparatus of claim 3, wherein said at least part of the data further includes an address (220) of a server device which the data traffic originating from said client device is destined for, and a port number (230) of the server device which the data traffic originating from said client device is destined for.

5. The network routing apparatus of one of claims 1 to 4, arranged to operate in accordance with the ICMP, Internet Control Message Protocol, protocol, wherein said connection data transmission unit is further arranged to send ICMP sequence numbers (240) to said network filter system.

6. The network routing apparatus of one of claims 1 to 5, arranged to comply with IPsec, Internet Protocol Security, wherein said connection data transmission unit is further arranged to send SPI, Security Parameter Index, tags (250) to said network filter system.

7. The network routing apparatus of one of claims 1 to 6, wherein said at least part of the data includes a MAC, Media Access Control, address (260) of the client device from which the data traffic originates.

8. A network filter system (150) for applying at least one network security and/or filter mechanism to data traffic received from and/or sent to a network routing apparatus (110), said network routing apparatus being arranged for directing data traffic between a first computer network comprising at least one client device (100) and a second computer network comprising the network filter system, the network filter system comprising:
a security filter unit (160) for applying said at least one network security and/or filter mechanism;
a connection data reception unit (180) for repeatedly receiving from said network routing apparatus data describing data traffic that has passed the network routing apparatus, said data including information suitable to identify, for a given data traffic passing through the network filter system, the client device from which this data traffic originates and/or which this data traffic is destined for; and
a connection data store (170) for storing the data received by said connection data reception unit.

9. The network filter system of claim 8, wherein said security filter unit is arranged to identify from the received data the client device which a current data traffic originates from and/or which this data traffic is destined for, and individually adjust said at least one network security and/or filter mechanism to the identified client device.

10. The network filter system of claim 8 or 9, wherein said information includes an address of the client device within the address space of the first computer network, and a port number used for the data traffic originating from, or destined for, said client device.

11. The network filter system of claim 10, wherein said information further includes an address of a server device which the data traffic originating from said client device is destined for, or which the data traffic destined for said client device is originating from, and a associated port number of the server device.

12. The network filter system of one of claims 8 to 11, wherein said information includes an address of the network routing apparatus within the address space of the second computer network.

13. A method of operating a network routing apparatus for directing data traffic between a first computer network and a second computer network, the first computer network comprising at least one client device, the second computer network comprising at least one server device and a network filter system, the network routing apparatus being arranged to direct any data traffic originating from said at least one client device and destined for said at least one server device through said network filter system, the method comprising:
translating (310) addresses within the address space of the first computer network to addresses within the address space of the second computer network;
storing (320) data in a connection tracking table, the data describing data traffic that has passed the network routing apparatus and including addresses within the address space of the first computer network and respective translated addresses within the address space of the second computer network; and
repeatedly sending (340) at least part of the data stored in the connection tracking table to said network filter system, said at least part of the data including information suitable for the network filter system to identify, for a given data traffic passing through the network filter system, the client device from which this data traffic originates.

14. A method of operating a network filter system to apply at least one network security and/or filter mechanism to data traffic received from and/or sent to a network routing apparatus, said network routing apparatus being arranged for directing data traffic between a first computer network comprising at least one client device and a second computer network comprising the network filter system, the method comprising:
receiving (410) data traffic from said network routing apparatus and/or from an internet server (190); and
applying (430) said at least one network security and/or filter mechanism to the received data traffic,
wherein the method further comprises:
repeatedly receiving (400), from said network routing apparatus, data describing data traffic that has passed the network routing apparatus.

15. A computer-readable storage medium storing instructions that, when executed by at least one processor, cause said at least one processor to perform the method of claim 13 or 14.
